# FASCICULE DE BREVET EUROPEEN

(11) **EP 1 809 147 B1**
(45) Date de publication et mention de la délivrance du brevet: **24.03.2010**
(21) Numéro de dépôt: 05803219.4
(22) Date de dépôt: 26.10.2005
(51) Int. Cl.: A47G 7/06, B65D 85/50, A01G 5/04

(54) **DISPOSITIF DE PRÉSENTATION DE BOUQUETS DE FLEURS**
VORRICHTUNG ZUR PRÄSENTATION VON BLUMENSTRÄUSSEN
DEVICE FOR PRESENTING BOUQUETS OF FLOWERS

(30) Priorité: 29.10.2004 LU 91118
(43) Date de publication de la demande: 25.07.2007
(73) Titulaire: Charrin, Philippe, 26600 Beaumont Monteux (FR)
(72) Inventeur: Charrin, Philippe, 26600 Beaumont Monteux (FR)
(74) Mandataire: Machtalère, Georges
(86) Numéro de dépôt international: PCT/EP2005/055559
(87) Numéro de publication internationale: WO 2006/045812

(56) Documents cités:
- EP-B- 0 828 446
- WO-A-03/101838
- BE-A- 629 513
- FR-A- 2 771 783
- GB-A- 2 350 272
- US-A1- 2001 045 059

## Description

L'invention est relative à un dispositif pour la présentation de bouquets individuels de fleurs selon la revendication 1. Les revendications dépendantes contiennent des modes particuliers d'exécution. La clientèle visée est l'ensemble de la filière fleuriste (les fleuristes, les horticulteurs, les particuliers, les bouquetteries, les grossistes, les distributeurs).

Le brevet EP 0 828 446 et la demande WO 03/101 838 décrivent un dispositif pour la présentation de bouquets individuels de fleurs selon le préambule de la revendication 1.

Le dispositif pour la présentation de bouquets individuels de fleurs est défini dans la revendication 1.

La présente invention sera mieux comprise en se référant aux figures suivantes :

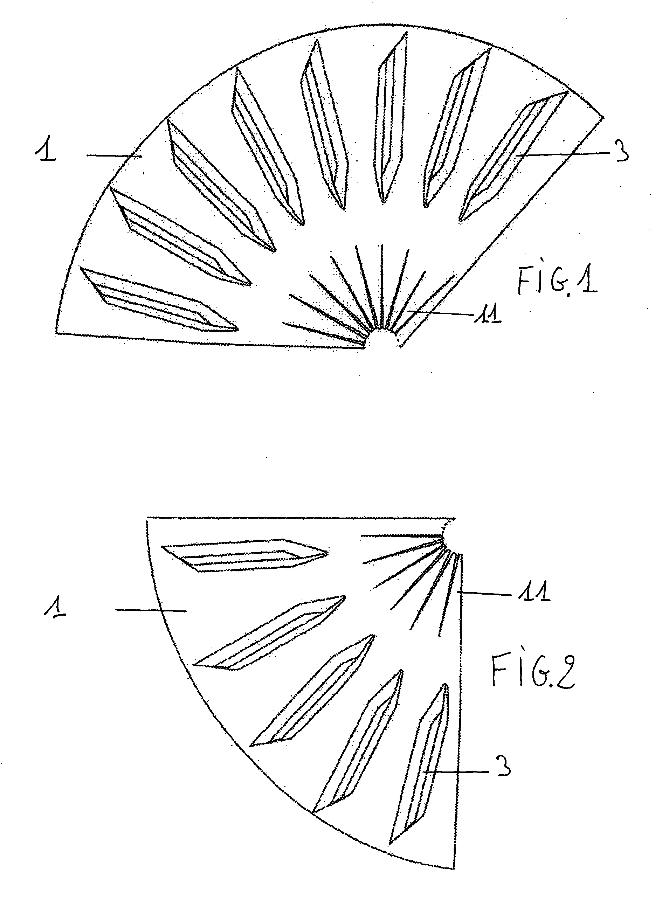

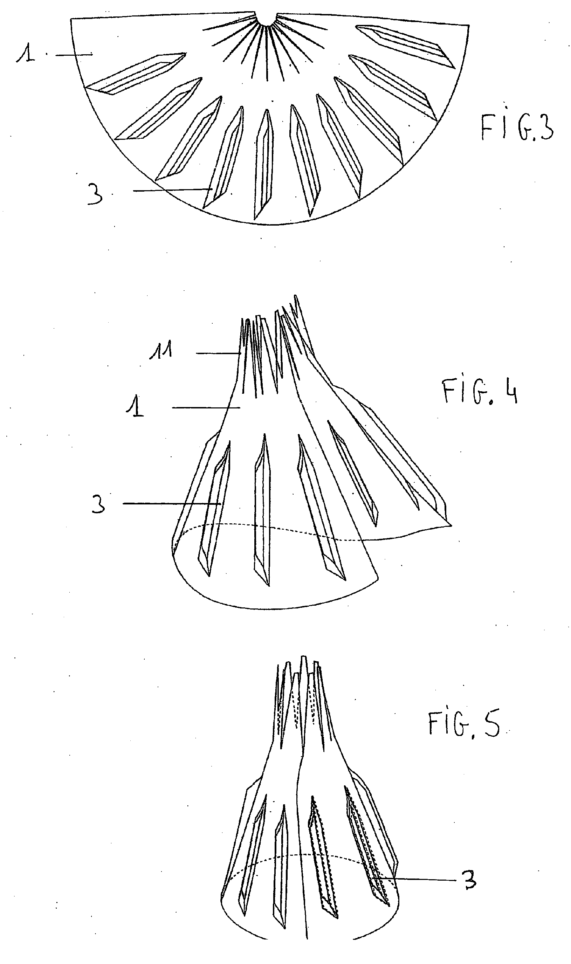

La figure 1 représente les deux tiers de la surface du support de la figure 3.
La figure 2 représente une fraction de la surface du support de la figure 3 permettant une mise en forme différente.
La figure 3 représente le support livré à plat de la présente invention ayant une pluralité de structures géométriques creuses tridimensionnelles obliques.
La figure 4 représente la mise en forme du support de l'invention en un volume conique par enroulement.
La figure 5 représente le support conique de l'invention, en position d'utilisation et son système de réglage constitué par l'emboîtement de structures géométriques creuses tridimensionnelles obliques males et femelles complémentaires les unes des autres.

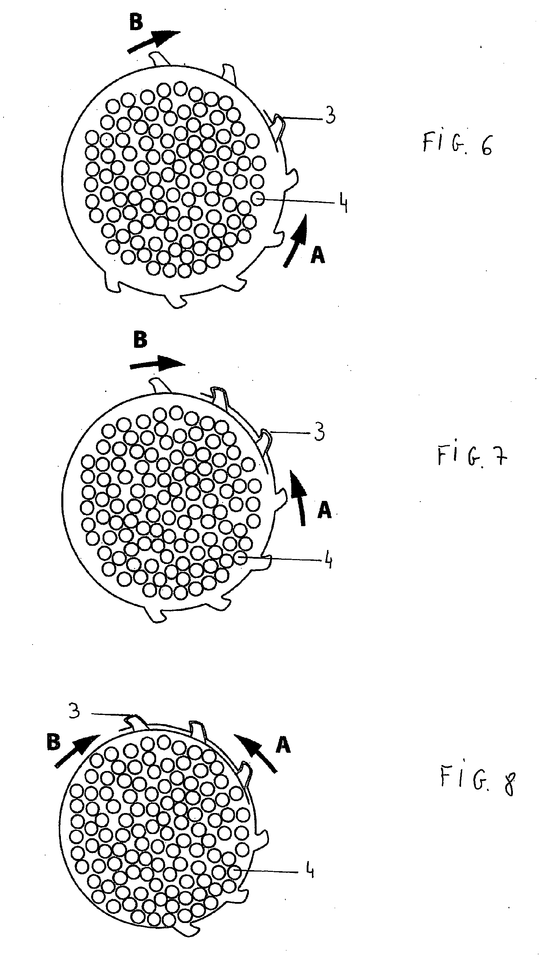

La figure 6 représente une vue en section du système de réglage constitué par l'emboîtement d'une structure géométrique creuse tridimensionnelle oblique complémentaire male et femelle (en contre dépouille), les ronds (4) à l'intérieur du support représentent les tiges des fleurs en section. Les flèches A et B représentant le sens d'enroulement de chaque extrémité du support.
La figure 7 représente une vue en section du système de réglage constitué par l'emboîtement de 2 structures géométriques creuses tridimensionnelles obliques complémentaires males et femelles (en contre dépouille), les ronds (4) à l'intérieur du support représentent les tiges des fleurs en section. Les flèches A et B représentant le sens d'enroulement de chaque extrémité du support.
La figure 8 représente une vue en section du système de réglage constitué par l'emboîtement de 3 structures géométriques creuses tridimensionnelles obliques complémentaires males et femelles (en contre dépouille), les ronds (4) à l'intérieur du support représentent les tiges des fleurs en section. Les flèches A et B représentant le sens d'enroulement de chaque extrémité du support.

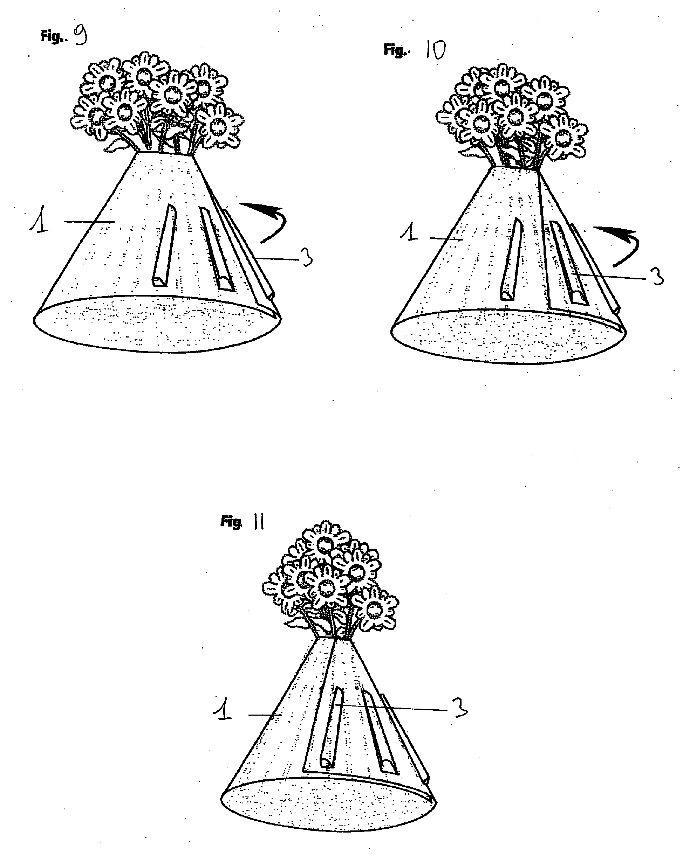

La figure 9 représente la mise en forme du support de l'invention en un volume conique contenant un bouquet de fleurs, en position d'utilisation, et le système de réglage constitué par l'emboîtement d'une structure géométrique creuse tridimensionnelle oblique complémentaire male et femelle (en contre dépouille). Ce mode de réalisation ne comprend pas de languettes.
La figure 10 représente la mise en forme du support de l'invention en un volume conique contenant un bouquet de fleurs, en position d'utilisation, et le système de réglage constitué par l'emboîtement de deux structures géométriques creuses tridimensionnelles obliques complémentaires males et femelles (en contre dépouille). Ce mode de réalisation ne comprend pas de languettes.
La figure 11 représente la mise en forme du support de l'invention en un volume conique contenant un bouquet de fleurs, en position d'utilisation, et le système de réglage constitué par l'emboîtement de trois structures géométriques creuses tridimensionnelles obliques complémentaires males et femelles (en contre dépouille). Ce mode de réalisation ne comprend pas de languette.

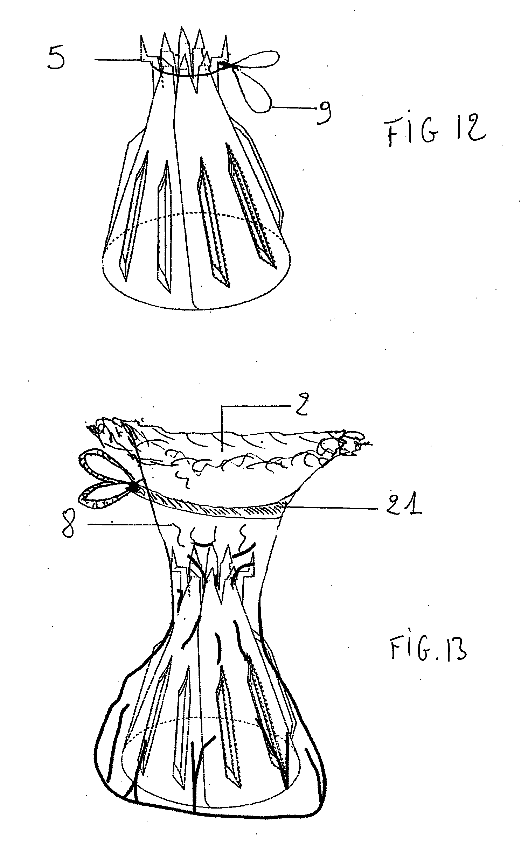

La figure 12 représente la mise en forme du support de l'invention en un volume conique et une dent de retenue au niveau de chaque languette pour la fixation éventuelle du lien (9).
La figure 13 représente la mise en forme du support de l'invention en un volume conique, les dents de retenue au niveau des languettes et une feuille étanche disposée sous le bord inférieur de la partie inférieure du support pour former un fond et cette feuille étanche étant relevée le long de la paroi latérale externe du support.

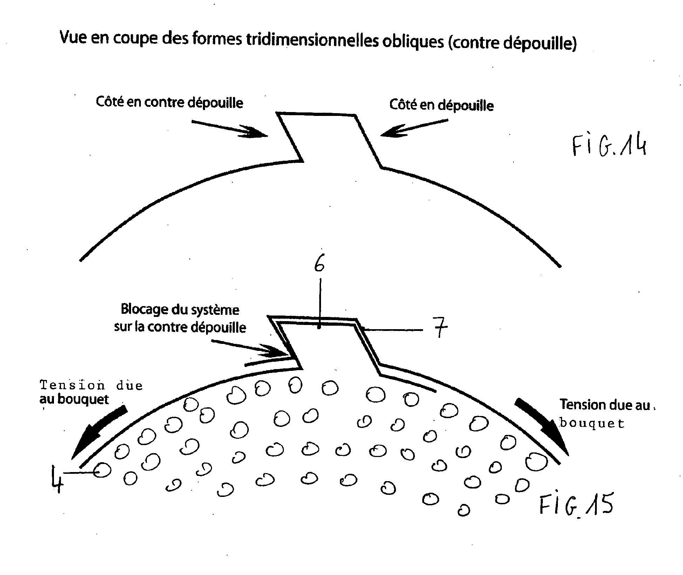

La figure 14 représente le coté en contre dépouille et le coté en dépouille d'une structure géométrique tridimensionnelle male de l'invention.
La figure 15 représente le mode de fonctionnement du système de fermeture male et femelle du dispositif de l'invention, notamment le blocage du système sur le coté en contre dépouille lors de l'emboîtement de la partie male avec la partie femelle et les forces de tension opposées exercées par le bouquet sur le support.

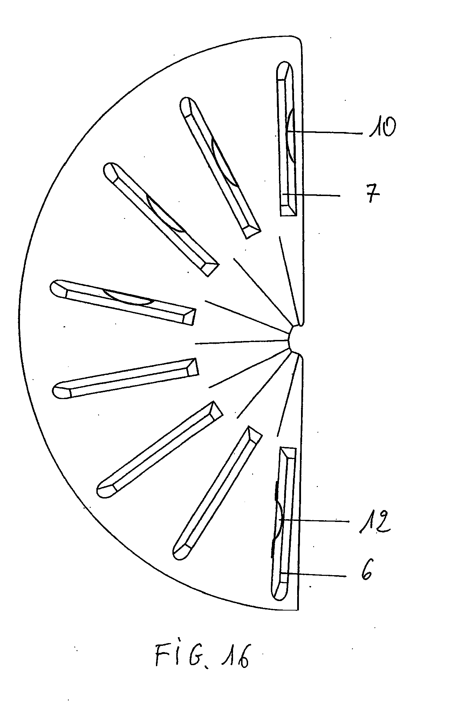

La figure 16 représente le dispositif à plat avec les structures géométriques tridimensionnelles femelles (7) comprenant un système de verrouillage male sur leur coté en dépouille et un système de verrouillage femelle sur le coté en dépouille d'une structure géométrique tridimensionnelle male (6) complémentaire de la structure géométrique tridimensionnelle femelle (7).

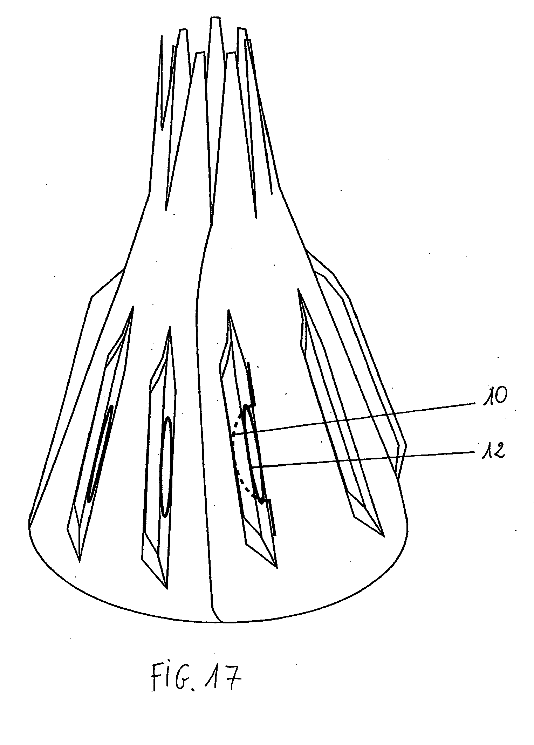

La figure 17 représente le dispositif en un volume conique dans lequel l'une des structures géométriques tridimensionnelles femelles (7) comprend un système de verrouillage male sur son coté en dépouille venant s'emboîter par pression dans un système de verrouillage femelle sur le coté en dépouille d'une structure géométrique tridimensionnelle male (6) complémentaire de la structure géométrique tridimensionnelle femelle (7).
L'approche problème solution est la suivante:
La différence entre l'état de la technique le plus proche càd EP 0 828 446 et la présente invention est que le système de fermeture réglable est constitué par l'emboîtement de structures géométriques tridimensionnelles males et femelles complémentaires les unes des autres (3), lesdites structures géométriques tridimensionnelles males (6) ont leur coté externe en contre dépouille venant buter contre le coté interne en contre dépouille des structures géométriques tridimensionnelles femelles (7).

Le problème que la présente invention se propose de résoudre est d'améliorer la vitesse de fermeture du support repliable ainsi que la fiabilité du dispositif afin d'obtenir un verrouillage plus rapide et tout aussi efficace que celui de l'état de la technique le plus proche.

L'effet technique est que le coté externe en contre dépouille de la partie male vient buter contre le coté interne en contre dépouille de la partie femelle (ceci est clairement montré à la figure 15) pour verrouiller le support et grâce aux forces de tension opposées exercées par le bouquet sur les extrémités du support (1) et notamment sur les structures géométriques (3) le verrouillage est parfait.

La solution est d'emboîter des structures géométriques tridimensionnelles obliques par rapport au plan formé par le support à plat et radiales complémentaires les unes des autres lors de l'enroulement du support livré à plat. Un réglage du diamètre de l'ouverture est possible en augmentant ou en réduisant l'enroulement du support. La présente invention se distingue entre autre d'un dispositif de présentation de fleurs possédant un système de fermeture par clipsage de boutons tridimensionnels complémentaires en forme de champignons (ex : boutons pressions) par la forme oblique (nouvelle et inventive) des structures géométriques tridimensionnelles de la présente invention qui garantie un blocage du système sur la contre dépouille (ceci est clairement montré à la figure 15) grâce aux force de tension opposées exercées par le bouquet sur le support (1) et notamment sur les structures géométriques (3) radiales. La combinaison de la forme oblique des structures géométriques et des forces de tension opposées exercées par le bouquet sur les cotés en contre dépouilles du support (1) n'a jamais été suggérée dans l'art antérieur, rendant par conséquent la présente invention nouvelle et inventive.

La présente invention concerne un dispositif pour la présentation verticale de bouquets individuels de fleurs avec ou sans réserve d'eau, plus précisément un système concernant la fermeture du support repliable par emboîtement, clipsage, verrouillage ou insertion. Le système de fermeture est défini comme une pluralité de structures géométriques tridimensionnelles radiales males et femelles complémentaires s'emboîtant, le coté externe en contre dépouille de la partie male venant buter contre le coté interne en contre dépouille de la partie femelle, le système de fermeture de l'invention est défini par une forme tridimensionnelle oblique des structures géométriques (3) par rapport au plan formé par le support à plat (voir figure 3) et avec un côte en angle fermé une fois la mise en volume conique réalisée (cf. figures 14 et 15). Les structures géométriques (3) peuvent avoir toute forme géométrique possédant au moins deux cotés parallèles (parallélépipède droit ou oblique, prisme droit ou oblique, tronc de prisme oblique à base parallèles, pyramide, tronc de pyramide à base parallèles ....) sans se limiter à ces formes géométriques précédemment mentionnées. Ces structures géométriques (3) sont en relief par rapport au plan formé par le support (1) à plat, une partie de ces structures géométriques possèdent au moins deux cotés parallèles et l'autre partie se termine en pointe.

La combinaison de l'emboîtement de deux ou plusieurs formes tridimensionnelles obliques à contre dépouille avec les forces de tension exercées par le bouquet sur le support (1) et notamment sur les formes tridimensionnelles obliques garantissent un blocage parfait du système (cf figures 8 et 15).

Le support livré à plat s'enroule autour du bouquet et une ou plusieurs structures géométriques de ce support s'emboîtent alors les unes dans les autres (cf figures 6, 7 et 8) provoquant un verrouillage du support. En effet, le serrage autour du bouquet améliore la fermeture du système grâce aux forces de contraintes opposées des contre dépouilles (cf figure 15 : flèches) assurant de ce fait un maintien et un blocage parfait du support enroulé sur lui-même. Pour preuve, l'utilisation du support sans bouquet à l'intérieur occasionne une tenue insuffisante lors de la fermeture du support. La pluralité des structures géométriques offre la possibilité d'élargir ou de diminuer le diamètre de l'ouverture variable s'adaptant à la taille du bouquet. Le dispositif fonctionne sur toutes les tailles de support et peut être mis en oeuvre par tout moyen de formage, (par exemple thermoformage, moulage par injection, découpe) des clips en contre dépouille opposée ou d'une découpe simple du côté femelle.

La présente invention concerne plus précisément un dispositif de présentation de bouquets de fleurs individuels, comprenant un support (1) sensiblement plat, repliable, équipé d'un système de fermeture réglable pour assurer la mise en forme de ce support en un volume conique, en position d'utilisation, ayant une partie supérieure et une partie inférieure, cette partie supérieure pouvant comprendre une pluralité de languettes (11) (facultatives) et permettant une ouverture variable s'adaptant à la taille du bouquet, une feuille (8) étanche étant disposée sous le bord inférieur de cette partie inférieure du support pour former un fond et étant relevée le long de la paroi latérale du support pour la réalisation de bouquets à réserve d'eau, des moyens de fixation pour maintenir la feuille (8) en position relevée le long de la paroi latérale du support peuvent être envisagés pour permettre l'introduction d'eau par un orifice (2) défini par les languettes (11) à la partie supérieure du support repliable (1), et ledit dispositif est caractérisé en ce que le système de réglage est constitué par l'emboîtement de structures géométriques creuses (3) tridimensionnelles obliques complémentaires les unes des autres.

Les structures géométriques (3) radiales fonctionnent en contre dépouille et sont de forme allongées obliques et elles convergent vers la partie supérieure du support (1).

Un mode de réalisation comporte au moins une des structures géométriques tridimensionnelles femelles (7) peut comprendre au moins un système de verrouillage male (10) sur le coté en dépouille desdites structures géométriques tridimensionnelles femelles (7) venant s'emboîter par pression dans au moins un système de verrouillage femelle (12) sur le coté en dépouille d'au moins une structure géométrique tridimensionnelle male (6) complémentaire des structures géométriques tridimensionnelles femelles (7).

Un autre mode de réalisation comporte des structures géométriques tridimensionnelles femelles (7) pouvant comprendre au moins un système de verrouillage male sur le coté en contre dépouille desdites structures géométriques tridimensionnelles femelles (7) venant s'emboîter par pression dans un système de verrouillage femelle sur le coté en contre dépouille d'une structure géométrique tridimensionnelle male (6) complémentaire des structures géométriques tridimensionnelles femelles (7).

La feuille (8) étanche peut être relevée le long de la paroi latérale interne ou externe du support (1) pour la réalisation de bouquets à réserve d'eau. Le support (1) peut ne pas comprendre une feuille étanche si on veut maintenir un bouquet de fleurs séchées en position verticale. Néanmoins, une feuille étanche peut envelopper le support contenant des fleurs séchées pour obtenir un effet esthétique décoratif. La feuille étanche est donc un élément facultatif. Le dispositif comprend un lien (9) enroulé autour des languettes pour constituer une première fixation du dispositif permettant une présentation individuelle et verticale des fleurs. En outre le dispositif comprend aussi un ruban (21) mis en place à la partie supérieure du support pour maintenir la feuille étanche contre le support (1). Le ruban (21) peut être mis en place au-dessus du lien (9) pour maintenir la feuille (8) contre le support (1), plus particulièrement contre les languettes.

Le support peut être muni de trous pour le passage du lien (9) permettant de solidariser le support conique aux tiges des fleurs.

La partie inférieure du support (1), en position d'utilisation, constitue un fond ouvert. Le support (1) peut en outre comprendre un élément de base circulaire plat avec un rebord relevé le long de sa circonférence telle qu'une assiette par exemple.

Le support (1) peut comprendre des moyens de collage destinés à maintenir la feuille (8) en place avant l'enroulement du ruban (21).

Chaque languette peut être pourvue d'une dent de retenue pour la fixation d'un lien.

Le support (1) est réalisé au moyen d'une feuille en matière plastique ou autres matériaux semi rigides ou rigides et étant résistant ou non résistant à l'eau.

La feuille (8) étanche possède une dimension qui permet à cette feuille (8) de contenir une réserve d'eau à la partie inférieure du support assurant une parfaite stabilité du support grâce au poids de l'eau. Néanmoins, le support (1) peut aussi être utilisé sans feuille (8) et donc sans eau, pour contenir un bouquet de fleurs séchées par exemple.

## Revendications

1. Dispositif de présentation de bouquets de fleurs individuels, comprenant: un support (1) sensiblement plat, repliable, équipé d'un système de fermeture réglable pour assurer la mise en forme de ce support en un volume en position d'utilisation, ayant une partie supérieure et une partie inférieure, et **caractérisé en ce que** le système de fermeture réglable est constitué par l'emboîtement de structures géométriques tridimensionnelles males et femelles complémentaires les unes des autres (3), lesdites structures géométriques tridimensionnelles males (6) possèdent au moins un coté externe en contre dépouille venant buter contre au moins un coté interne en contre dépouille des structures géométriques tridimensionnelles femelles (7).

2. Dispositif selon la revendication 1 dans lequel les structures géométriques sont obliques.

3. Dispositif selon la revendication 1 dans lequel les structures géométriques sont radiales.

4. Dispositif selon la revendication 1 dans lequel au moins une des structures géométriques tridimensionnelles femelles (7) comprend au moins un système de verrouillage male (10) sur le coté en dépouille venant s'emboîter par pression dans au moins un système de verrouillage femelle (12) sur le coté en dépouille d'au moins une structure géométrique tridimensionnelle male (6) complémentaire des structures géométriques tridimensionnelles femelles (7).

5. Dispositif selon la revendication 1 dans lequel au moins une des structures géométriques tridimensionnelles femelles (7) comprend au moins un système de verrouillage male sur le coté en contre dépouille venant s'emboîter par pression dans au moins un système de verrouillage femelle sur le coté en contre dépouille d'au moins une structure géométrique tridimensionnelle male (6) complémentaire des structures géométriques tridimensionnelles femelles (7).

6. Dispositif selon la revendication 1 dans lequel la partie supérieure comprend une pluralité de languettes (11) et permet une ouverture variable des languettes s'adaptant à la taille du bouquet.

7. Dispositif selon la revendication 1 dans lequel une feuille (8) étanche est disposée sous le bord inférieur de la partie inférieure du support pour former un fond et est relevée le long de la paroi latérale du support.

8. Dispositif selon la revendication 7 comprenant des moyens de fixation pour maintenir la feuille (8) en position relevée le long de la paroi latérale du support pour permettre l'introduction d'eau par un orifice (2) défini par les languettes (11) à la partie supérieure du support repliable (1).

9. Dispositif selon la revendication 1 dans lequel le support (1) repliable est transformable en un volume conique.

10. Dispositif selon la revendication 1 dans lequel les structures géométriques (3) sont creuses.

11. Dispositif selon la revendication 1 dans lequel les structures géométriques (3) sont de forme allongée et se terminent en pointe.

12. Dispositif selon la revendication 1 dans lequel une partie des structures géométriques (3) possède au moins deux cotés parallèles.

13. Dispositif selon la revendication 1 dans lequel les structures géométriques (3) sont en relief par rapport au plan formé par le support (1) à plat.

14. Dispositif selon la revendication 1 dans lequel la feuille (8) étanche est relevée le long de la paroi latérale interne du support (1).

15. Dispositif selon la revendication 1 dans lequel la feuille (8) étanche est relevée le long de la paroi latérale externe du support (1).

16. Dispositif selon la revendication 1 dans lequel les moyens de fixation comprennent :
- un ruban (21) mis en place à la partie supérieure du support pour maintenir la feuille étanche contre le support (1).

17. Dispositif selon la revendication 13 dans lequel les moyens de fixation comprennent :
- un ruban (21) mis en place au-dessus du lien (9) pour maintenir la feuille (8) contre le support (1).

18. Dispositif selon la revendication 1 dans lequel chaque languette peut être pourvue d'une dent de retenue (5) pour la fixation du lien (9).

## Claims

1. A device for presenting individual bouquets of flowers, comprising: a substantially flat, foldable support (1) equipped with an adjustable closing system in order to ensure the shaping of this support into a volume in the position of use, having an upper portion and a lower portion, and **characterized in that** the adjustable closing system is formed with the nesting of male and female three-dimensional geometrical structures mating each other (3), said male three-dimensional geometrical structures (6) have at least one external side in undercut which will abut against at least one internal side in undercut of the female three-dimensional geometrical structures (7).

2. The device according to claim 1, wherein the geometrical structures are oblique.

3. The device according to claim 1, wherein the geometrical structures are radial.

4. The device according to claim 1, wherein at least one of the female three-dimensional geometrical structures (7) comprises at least one male locking system (10) on the side opposed to the undercut which will fit by pressure into at least one female locking system (12) on the side opposed to the undercut of at least one male three-dimensional geometrical structure (6) mating the female three-dimensional geometrical structures (7).

5. The device according to claim 1, wherein at least one of the female three-dimensional geometrical structures (7) comprises at least one male locking system on the undercut side which will fit by pressure into at least one female locking system on the undercut side of at least one male three-dimensional geometrical structure (6) mating the female three-dimensional geometrical structures (7).

6. The device according to claim 1, wherein the upper portion comprises a plurality of tabs (11) and allows variable opening of the tabs accommodating to the size of the bouquet,

7. The device according to claim 1, wherein a sealed sheet (8) is positioned under the lower edge of the lower portion of the support in order to form a bottom and is raised along the side wall of the support,

8. The device according to claim 7 comprising attachment means for maintaining the sheet (8) in the raised position along the side wall of the support in order to allow water to be introduced through an orifice (2) defined by the tabs (11) at the upper portion of the foldable support (1).

9. The device according to claim 1, wherein the foldable support (1) may be transformed into a conical volume.

10. The device according to claim 1, wherein the geometrical structures (3) are hollow.

11. The device according two claim 1, wherein the geometrical structures (3) are of an elongated shape and end with tips.

12. The device according to claim 1, wherein a portion of the geometrical structures (3) has at least two parallel sides.

13. The device according to claim 1, wherein the geometrical structures (3) are in relief with respect to the plane formed by the flat support (1).

14. The device according to claim 1, wherein the sealed sheet (8) is raised along the internal side wall of the support (1).

15. The device according to claim 1, wherein the sealed sheet (8) is raised along the external side wall of the support (1).

16. The device according to claim 1, wherein the attachment means comprise:
- a ribbon (21) placed at the upper portion of the support in order to maintain the sealed sheet against the support (1).

17. The device according to claim 13, wherein the attachment means comprise:
- a ribbon (21) placed above the tie (9) for maintaining the sheet (8) against the support (1).

18. The device according to claim 1, wherein each tab may be provided with a retaining tooth (5) for attaching the tie (9).

## Patentansprüche

1. Vorrichtung zur Präsentation von einzelnen Blumensträußen, umfassend: einen etwa flachen, faltbaren Halter (1), der mit einem verstellbaren Verschlusssystem ausgestattet ist, um die Formung dieses Halters als ein Volumen in Verwendungsposition zu gewährleisten, mit einem oberen Abschnitt und einem unteren Abschnitt, und **dadurch gekennzeichnet, dass** das verstellbare Verschlusssystem von der Rastung zueinander komplementärer dreidimensionaler geometrischer männlicher und weiblicher Strukturen (3) gebildet wird, wobei die männlichen dreidimensionalen geometrischen Strukturen (6) mindestens eine hinterschnittene äußere Seite besitzen, die gegen mindesten eine hinterschnittene innere Seite der weiblichen dreidimensionalen geometrischen Strukturen (7) anschlagen.

2. Vorrichtung nach Anspruch 1, wobei die geometrischen Strukturen schräg sind.

3. Vorrichtung nach Anspruch 1, wobei die geometrischen Strukturen radial sind.

4. Vorrichtung nach Anspruch 1, wobei mindestens eine der weiblichen dreidimensionalen geometrischen Strukturen (7) mindestens ein männliches Verriegelungssystem (10) auf der formschrägen Seite umfasst, das durch Druck in mindestens ein weibliches Verriegelungssystem (12) auf der formschrägen Seite mindestens einer männlichen dreidimensionalen Struktur (6) einrastet, die zu den weiblichen dreidimensionalen geometrischen Strukturen (7) komplementär ist.

5. Vorrichtung nach Anspruch 1, wobei mindestens eine der weiblichen dreidimensionalen geometrischen Strukturen (7) mindestens ein männliches Verriegelungssystem auf der hinterschnittenen Seite umfasst, das durch Druck in mindestens ein weibliches Verriegelungssystem auf der hinterschnittenen Seite mindestens einer männlichen dreidimensionalen Struktur (6) einrastet, die zu den weiblichen dreidimensionalen geometrischen Strukturen (7) komplementär ist.

6. Vorrichtung nach Anspruch 1, wobei der obere Abschnitt eine Vielzahl von Laschen (11) umfasst und eine variable Öffnung der Laschen erlaubt, die sich an die Größe des Straußes anpassen.

7. Vorrichtung nach Anspruch 1, wobei unter den unteren Rand des unteren Abschnitts des Halters ein dichter Bogen (8) angeordnet ist, um einen Boden zu bilden, und entlang der seitlichen Wand des Halters aufrecht ist.

8. Vorrichtung nach Anspruch 7, die Befestigungsmittel umfasst, um den Bogen (8) in aufrechter Stellung entlang der seitlichen Wand des Halters zu halten, um das Einleiten von Wasser durch eine Öffnung (2) zu erlauben, die von den Laschen (11) am oberen Abschnitt des faltbaren Halters (1) definiert wird.

9. Vorrichtung nach Anspruch 1, wobei der faltbare Halter (1) in ein konisches Volumen umwandelbar ist.

10. Vorrichtung nach Anspruch 1, wobei die geometrischen Strukturen (3) hohl sind.

11. Vorrichtung nach Anspruch 1, wobei die geometrischen Strukturen (3) länglich geformt sind und spitz enden.

12. Vorrichtung nach Anspruch 1, wobei ein Abschnitt der geometrischen Strukturen (3) mindestens zwei parallele Seiten besitzt.

13. Vorrichtung nach Anspruch 1, wobei die geometrischen Strukturen (3) im Verhältnis zur vom flachen Halter (1) gebildeten Ebene reliefartig sind.

14. Vorrichtung nach Anspruch 1, wobei der dichte Bogen (8) entlang der inneren seitlichen Wand des Halters (1) aufrecht ist.

15. Vorrichtung nach Anspruch 1, wobei der dichte Bogen (8) entlang der äußeren seitlichen Wand des Halters (1) aufrecht ist.

16. Vorrichtung nach Anspruch 1, wobei die Befestigungsmittel umfassen: - ein Band (21), das im oberen Abschnitt des Halters platziert ist, um den Bogen dicht am Halter (1) zu halten.

17. Vorrichtung nach Anspruch 13, wobei die Befestigungsmittel umfassen: - ein Band (21), das über der Verbindung (9) platziert ist, um den Bogen (8) am Halter (1) zu halten.

18. Vorrichtung nach Anspruch 1, wobei jede Lasche mit einem Haltezahn (5) zur Fixierung der Verbindung (9) ausstattbar ist.
